Europäisches Patentamt

European Patent Office

Office européen des brevets

(19)

(11) Publication number: **0 031 483**
**B1**

(12)

# EUROPEAN PATENT SPECIFICATION

(45) Date of publication of patent specification: **13.06.84**

(51) Int. Cl.³: **H 04 N 5/193, G 02 B 7/11**

(21) Application number: **80107590.4**

(22) Date of filing: **04.12.80**

(54) **Closed loop autofocus system.**

(30) Priority: **26.12.79 US 106563**

(43) Date of publication of application:
**08.07.81 Bulletin 81/27**

(45) Publication of the grant of the patent:
**13.06.84 Bulletin 84/24**

(84) Designated Contracting States:
**DE FR GB SE**

(56) References cited:
**GB - A - 1 293 608**
**GB - A - 1 446 577**
**US - A - 3 356 792**
**US - A - 3 617 633**
**US - A - 4 045 805**

**Patents Abstracts of Japan Vol. 3, No. 70, 16
June 1979 page 87E117**

(73) Proprietor: **Hughes Aircraft Company
Centinela Avenue and Teale Street
Culver City, California 90009 (US)**

(72) Inventor: **Zwirn, Robert
2234 Kelton Avenue
Los Angeles California 90064 (US)**

(74) Representative: **Schwindling, Hans, Dipl.-Phys.
et al,
Kohler-Schwindling-Späth Patentanwälte
Hohentwielstrasse 41
D-7000 Stuttgart 1 (DE)**

Courier Press, Leamington Spa, England.

## Description

### Technical Field

This invention relates to focusing systems utilizing data received from a source and particularly to a closed loop autfocus system that provides high resolution automatic focusing by utilizing only the scene information.

### Background of the Invention

#### 1. Field of the Invention

One of the problems associated with display of information received from a scene is the low resolution resulting from out of focus conditions and the difficulty that the operator experiences in trying to manually maintain a degree of focus. Characteristically, an operator is unable to maintain continual focus or to maintain a stable appearing focus under varying conditions of scene, range to the scene and thermal effects on the optics. A system that would provide automatic focus would not only provide a higher resolution picture but would free the operator of the task of changing the focus controls. The concept for autofocus utilizing sensor data received from a scene is to provide a device that performs the same function as the operator, i.e., it must move an optical element in a direction to maintain optimum focus so as to provide a high degree of resolution.

#### 2. Description of the Prior Art

A focal control concept was discussed in a technical report AFAL—TR—76—161 Video Controlled FLIR Focus, November 1976 by Texas Instruments Incorporated, Defense Document Center No. ADA034116, received by Defense Document Center on January 10, 1977. This report shows a focus system utilizing a full wave rectifier or conventional peak detector forming a signal proportional to the amount of AC signal present in a video controlled low focus step rate system and concludes that the system does not provide sufficient focus dependent signal to provide proper operation. Other prior art systems utilize a standard reference image such as in U.S. Patent No. 3,356,792 to D. L. Peters, which approach has been found to have certain limitations. It would be a substantial advance to the art if an autofocus system were provided which responded to only scene information and noise in a manner so that reliable and continuous near optimum focusing of the data and the display scene were provided.

### Summary of the Invention

It is therefore an object of the invention to provide an improved closed loop focus system that provides focusing as a function of only the scene information.

It is a further object of the invention to provide an autofocus system that provides reliable focusing in the presence of system noise and substantially accommodates the SNR (signal to noise ratio) of the input video signals.

It is another object of the invention to provide an autofocus system that is readily adaptable to different types of sensor systems.

It is still another object of the invention to provide an automatic focus system that operates to reliably compensate for variations in range to the target or in range over the field of view as well as to compensate for mechanically induced or temperature induced displacements in the sensor system.

It is another object of the invention to provide an automatic focus system that operates on a parameter with relatively small dynamic range requirements.

Therefore in accordance with the invention, a closed loop auto-focusing system is provided, as et out in the appended claims to which reference is not directed.

The autofocus system in accordance with one embodiment of the invention includes a sensor, a band-pass filter and gating arrangement, a focus discriminator, a hunting type servo having a logic algorithm to control the focusing optics and a motor to drive the focusing optics in directions toward improving focus and at speeds for quickly correcting the focus errors. The focus discriminator includes a gated peak to peak detector including a conditional integrator and a sample and hold circuit. The output of the focus discriminator increases with increasing optical resolution so that optimum focus is obtained by maximizing the discriminator output. The focus discriminator is substantially indendent of the scene type and it responds only to variations in focus of the sensor data, principally to the high frequency components of the sensor data.

The large dynamic range of the scene is accommodated by the conditional integrator which allows the input peak to peak detection, signals to contribute to the integrated value only if they exceed the amplitude of the present integrator output signal. This integrator signal is periodically sampled and the samples differentiated. The hunting servo responds to the differentiated signal to continually drive the optics in a direction which maximizes the amplitudes of the high frequency components of the incoming video signal. The system responds to minute focus variations which are imperceptible to the operator to reliably maintain focus regardless of noise, range or temperature variations.

### Brief Description of the Drawings

The novel features that are considered characteristic of this invention are set forth with particularity in the appended claims. The invention itself, both as to its organization and method of operation as well as additional objects and advantages thereof, will best be understood from the following description when read in connection with the accompanying drawing in which like reference numbers refer to like part and in which:

FIG. 1 is a schematic block and circuit diagram for generally explaining the autofocus system in accordance with the invention;

FIGS. 2a and 2b are schematic circuit and block diagrams showing an illustrative arrangement of the system of FIG.1 in further detail;

FIG. 3 is a schematic diagram of waveforms of voltage as a function of time showing the raster gating and other signals for further explaining the system of FIGS. 2a and 2b;

FIG. 4 is a schematic diagram of waveforms of voltage as a function of time showing the gating of the individual lines of the scene;

FIG. 5 is a schematic graph of amplitude response in db as a function of frequency for further explaining the focus filter response of the system of FIGS. 2a and 2b;

FIG. 6 is a schematic graph of the noise suppression factor versus input SNR for further explaining the advantages of the condition integrator in accordance with the invention; and

FIG. 7 is a schematic graph of focus discriminator output in volts versus relative resolution for further explaining the overall focus discriminator response in the system of FIGS. 2a and 2b.

## Detailed Description of the Invention

Many previous approaches to autofocus of video scene data have relied on methods which involve measuring scene energy. However, these techniques must contend with the very large dynamic range associated with different scenes and with very large objects in the scene. For example, the overall dynamic range required when a scene changes from one dark grey pixel in a sea of black pixels to a light grey pixel in a sea of white pixels has been determined to be approximately 4.5 times $10^{10}$:1 or a voltage ration of 213 db. Some of the energy methods that have been considered in the prior art are direct fourier transforms, narrow-band filters with RMS meters and spectrum analyzers, all of which have a dynamic range limitation. The system in accordance with the invention utilizes frequency component amplitude information for determining focus variation and is not limited by the size of objects in the scene or the number of gradients that are formed. The focus results of the system of the invention are substantially independent of the picture area and the system operates reliably over all scene types.

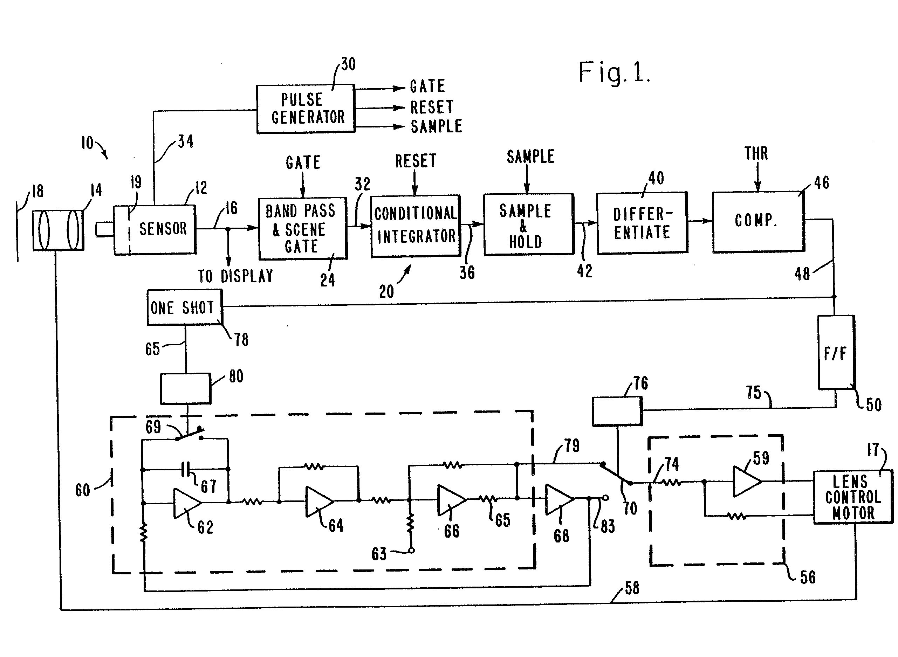

Referring first to FIG. 1 which is a schematic block and circuit diagram of the closed loop autofocus system in accordance with the invention, a sensor system 10 which may include a sensor 12 and a variable lens or antenna 14 applies video signal data to a lead 16 from which the data may be applied to a suitable display (not shown). The sensor 12 which receives data from a scene 18 is not limited to operation at any particular frequency and may be of any suitable type such as TV camera or Vidicon, an IR sensor, a laser energy sensor for receiving reflected laser energy or any sensor responding to reflected or emitted microwave energy. The variable lens or antenna 14 within the scope of the invention may be a portion of the sensor or a separate element as shown, focusing the received scene data as an image on a focal plane which may be a set of detectors, the photo cathode of the vidicon, for example. If the sensor 10 is a vidcon, the focal plane may be a photocathode 19 on which as scene 18 is focused by controlling the lens 14. The variable lens 14 has the requirement that it must rapidly change the focus in response to a lens control motor 17 which in turn responds to an input focus control signal. The sensor 12 in the illustrated system receives data from the scene 18 and scans the image on a focal plane in a raster format such as a TV type format, but it is to be understood that the invention is not limited to any particular scan format or to any particular method of forming the scan format as long as time adjacent samples correspond to spatially adjacent samples.

The video signal on the lead 16 is then applied to a focus discriminator 20 which includes a band pass filter and scene gate unit 24 with the filter having a selected frequency response and the scene gate selecting a portion of the raster of video data such as a central one-third of the scene 18 that is imaged on the focal plane or selecting any portion of the lines or video data. The band pass and scene gate unit 24 receives the video signals from the lead 16 and GATE signals from a pulse generator 30 to apply the filtered and scene gated signal through a lead 32 to a conditional integrator 26 which also receives a RESET pulse from the pulse generator 30. The conditional integrator 26 is a special form of peak detector that only integrates signal gradients having values greater than the current by stored integrated value. Any suitable timing unit may be utilized for the pulse generator 30 such as a divider and pulse forming arrangement, as is well known in the art, responsive to horizontal and vertical synchronizing signals as well as to clock signals which may be received through a composite lead 34 from the sensor 12. The high pass filter of the unit 24 weights the high frequency components of the video signal more heavily than the low frequency components and the peak detection operation acting as a conditional integrator sensors a conditional voltage proportional to the peak to peak amplitude of the resulting gradients. The sensed amplitude in the conditional integrator is a quantity derived only from the scene information, which quantity indicates the effective resolution of the input video data.

The signal provided by the conditional integrator unit 26 is applied through a lead 36 to a sample and hold unit 38 responding to a SAMPLE signal from the pulse generator 30 to periodically sample conditional integrator output. A differentiator 40 received the sampled signal from the sample and hold circuit 38 through a lead 42 and responds to the change of the sampled values for determining the change of the focus signal, the differentiated signal being then applied to a comparator circuit 46 also receiving a threshold (THR) voltage for making the comparison. The threshold voltage represents the minimum focus error to which the system will respond. When the differentiated signal which represents a decreasing focus condition has a negative value greater than the threshold, a signal is applied through a lead 48 to a toggle flip flop 50 for triggering it to the opposite state. As a result of the flip flop 50 being triggered, the continuously moving servo which is moving the focus lens 14 in a first or a second direction, reverses the direction of movement to a direction of an improved focus condition.

The lens control unit 17, which includes a bidirectional motor (not shown) responds to a power driver 56 to apply a movement signal through a suitable coupler 58 to the variable lens 14. The power driver 56 may include any suitable arrangement such as a high gain amplifier 59 as is well known in the art. An amplifier driver 60 provides the first stage of the motor drive and may include first, second and third operational amplifiers 62, 64 and 66 coupled in series with a suitable offset voltage, from a terminal 63 applied to the input of the amplifier 66. The amplifier 62 has an integrating capacitor 67 and a discharge switch 69 coupled between its input and output terminals. The offset voltage from the terminal 63 maintains the lens control motor 17 rotating at a low speed when the integrating capacitor 69 is discharged. The output terminal of the amplifier 66 is applied to an inverter 68 which applies an inverted drive signal to one terminal of a switch 70, the other terminal being coupled to the output of the amplifier 66. The output terminal of the inverter 68 is also applied to the input terminal of the amplifier 62 for providing feedback control. The switch 70 has its output terminal coupled through a lead 74 to the power driver amplifier 56.

The direction of movement of the lens control motor 17 is determined by the state of the toggle flip flop 50 which applies its output signal through a lead 75 to a switch driver 76 for changing the state of the switch 70 each time the flip flop 50 is triggered by the comparator 46. Thus, either a positive or an inverted driving signal is applied to the lens control motor 54 to control its direction of rotation. In order to reset the amplitude driver 60, a one shot circuit 78 responds to the comparator signal on the lead 48 to provide a signal through a lead 65 to activate a switch driver 80 and open and close a switch 82 at periodic scene scanning intervals. The illustrated amplitude drive 60 is an integrating type as a result of the capacitor 67 which increases the speed of the control motor 17 as a function of time. It is to be noted that the driver units 56 and 60 are only illustrative examples of a plurality of motor driver units as are well known in the art.

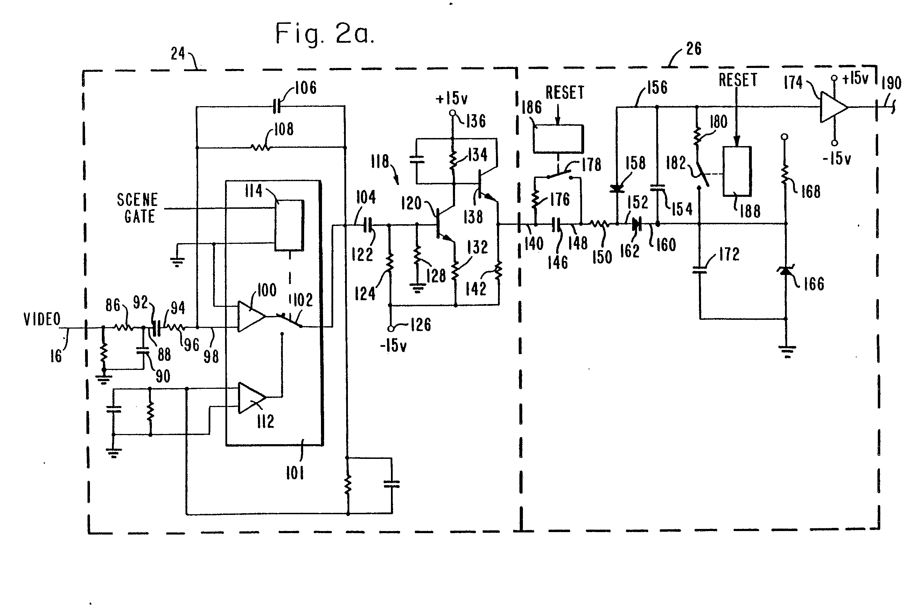

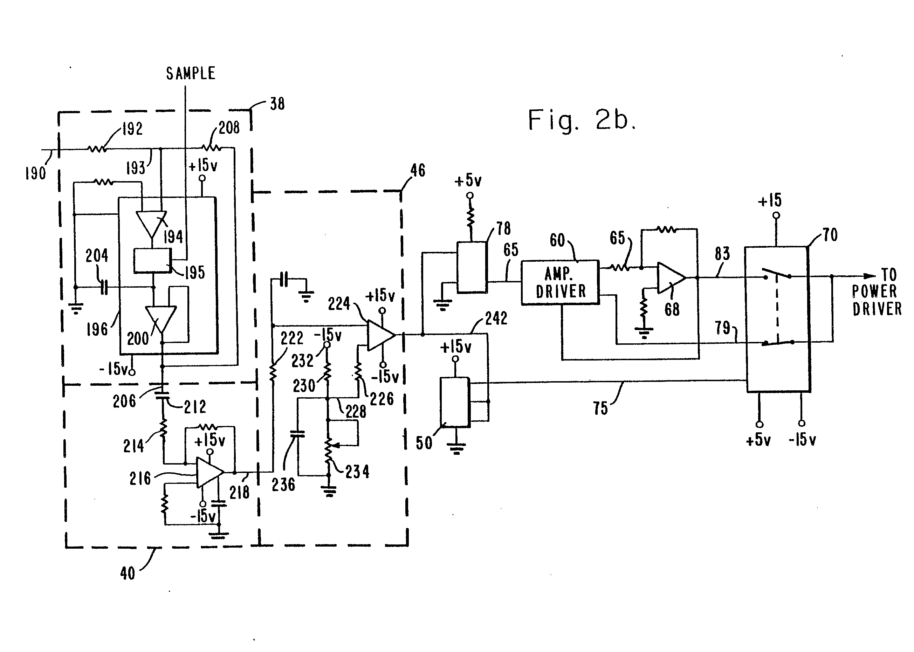

Referring now also to FIGS. 2a and 2b, which show a portion of the system of FIG. 1 in further detail, the video signal on the lead 16 is applied to a band pass amplifier 84 including a resistor 86 coupled between the lead 16 and a lead 88 and a capacitor 90 coupled between the lead 88 and ground, these two elements forming a characteristic having a low pass corner frequency with an amplitude slope at lower frequencies to provide a desired attenuation of the video signal components. A capacitor 92 is coupled between the lead 88 and a lead 94 which in turn is coupled to resistor 96, these two elements having a high pass corner characteristic. The resistor 96 is coupled through a lead 98 to an operational amplifier 100 of a switching unit 101 having its output coupled to a scene gating switch 102 which in turn is coupled to a lead 104. A capacitor 106 and a resistor 108 are coupled in parallel between leads 98 and 104 with the capacitor 106 in cooperation with the resistor 96 forming a second low pass corner filter characteristic so that a double pole band pass filter is provided.

The switching unit 101 which may be standard HA2405-5 chip, also includes an operational amplifier 112 having its output coupled to the lead 102 and its signal input terminal coupled to ground through a parallel coupled resistor and a capacitor so that when the switch 102 is in the opposite position shown, a reference level signal is applied to the lead 104. A suitable feedback resistor and capacitor are coupled in parallel from one input terminal of the operational amplifier 112 to the lead 104. A switch driver unit 114 controls the switch 102 in response to scene GATE signals received from the pulse generator 30 of FIG. 1, so that filtered video signals are only passed during a portion of the scene raster. An amplifier stage 118 including an n-p-n type transistor 120 having its base coupled through a coupling capacitor 122 to the lead 104 as well as through a resistor 124 to a —15 volt terminal 126 and through a resistor 128 to ground. The emitter of the transistor 120 is coupled through a load resistor 132 to the —15 volt terminal 126 and the collector is coupled through a resistor 134 as well as a suitable bypass capacitor to a+15 volt terminal 136. An emitter follower transistor 138 of the n-p-n type has its base coupled to the collector of the transistor 120, its collector coupled to the +15 volt terminal 136 and its emitter coupled to a lead 140 as well as through a resistor 142 to the —15 volt terminal 126.

The conditional integrator 26 includes a coupling capacitor 146 coupled between the lead 140 and a lead 148 which in turn is coupled through a timing resistor 150 to a lead 152. An integrating capacitor 154 has one terminal coupled through a lead 156 and the anode to cathode path of a charging diode 158 to the lead 152 and the other terminal coupled through a lead 160 and the cathode to anode plath of a clamping diode 162 to the lead 152. The lead 160 is biased by being connected to a zener diode 166 which is in turn coupled through a resistor 168 to a +15 volt terminal 170. The zener diode 146 is biased in its avalanche region so that approximately 9 volts is maintained on the lead 160, for example. A bypass capacitor 172 is also coupled between the lead 160 and ground potential to maintain a constant DC voltage on the lead 160. A high impedance isolating amplifier 174 has its input terminal coupled to the lead 156 to allow the conditional integration of the signal peaks to be performed. For resetting the detector, the leads 140 and 148 are coupled together through a resistor 176 and a switch 178 and the leads 156 and 160 are coupled together through a resistor 180 and a switch 182 for respectively discharging the capacitors 146 and 154. The RESET signal from the pulse generator 30 of FIG. 1 is applied to switch control units 186 and 188 for controlling the respective switches 178 and 182.

In the operation of a conditional integrator, a positive voltage $V_z$ is maintained on the lead 160 and the voltage at the start of integration on the lead 148 is $V_z + V_{DIODE}$ where $V_{DIODE}$ is the voltage drop across the diode 162. The clamping diode 162 prevents the voltage on the leads 148 and 152 from rising above the voltage $V_z + V_{DIODE}$. At the start of integration, the capacitor 146 and the resistor 150 provide a time constant which determines when the clamping diode 162 is able to conduct. The voltage $V_z + V_{DIODE}$ shifts the input signal levels on the lead 152 so that the positive peak of any signal component is clamped at that voltage value and only the negative peak is detected. The detected negative signal is thus representative of the conditionally integrated high frequency components of the input signal. As the signals are applied through the capacitor 146 to the lead 152, the integrating capacitor 154 responds to the negative peaks of the signals and starts to charge up to provide an increasing positive voltage on the lead 156 as the diode 158 conducts. However, the integration is conditional because only signals on the lead 152 that are more negative than the currently integrated value represented by the charge on the integrating capacitor 154, cause the diode 158 to conduct and provide integration. Thus, the conditional integrator act to integrate the difference between its input and its output values which provides integration with substantial noise suppression and operation allowing a relatively small dynamic range.

The sample and hold circuit 38 receives the peak detected signal on a lead 190 from the amplifier 174 and applies the signal through a resistor 192 and a lead 193 to one input terminal of an amplifier 194 of a standard 2425 unit. The other input terminal of the amplifier 194 is coupled to ground through a suitable resistor. The output terminal of the amplifier 194 is coupled through a switch 195 to a lead 198 which in turn is coupled to one input terminal of a voltage follower amplifier 200. The lead 198 is also coupled to ground through a holding or storage capacitor 204. The other input terminal of the amplifier 200 is coupled to an output lead 206 from the output terminal of the amplifier 200. The lead 193 is also coupled through a resistor 208 to the lead 206. The SAMPLE signal from pulse generator 30 of FIG. 1 is applied to the switch 196 to provide each new sample from the amplifier 194 to the storage capacitor 204.

The differentiator 40 receives a voltage representing the change in sampled signal levels on the lead 206 and applies the change of voltage levels through a differentiating capacitor 212 and in turn through a resistor 214 to apply a differential signal to one input terminal of an operational amplifier 216. The other input terminal of the operational amplifier 216 is coupled through a suitable resistor to ground and the output terminal is coupled to a lead 218. The differentiation is provided by the capacitor 212 and the resistor 214 relative to a virtual ground potential at the input terminal of the amplifier 216.

The comparator 46 applies the differential signal on the lead 218 through a resistor 222 to one input terminal of a differential amplifier 224. The other input terminal of the comparator 224 is coupled through a resistor 226 to a lead 228 which in turn is coupled through a resistor 230 to a −15 volt terminal 232, through a tapped resistor 234 to ground and through a by pass capacitor 236 to ground. A comparator threshold voltage is applied from a tap on the resistor 234 as well as to the lead 228. In operation, when the negative differential signal on the lead 218 is less than the negative threshold, the differential amplifier 224 applies a trigger signal to an output lead 242 for triggering the toggle flip flop 50 to the opposite state and for triggering the one shot circuit 78 to form a pulse which temporarily discharges the integrating capacitor 67 (FIG. 1) in the amplifier driver 60. At the end of the discharge pulses, the amplifier driver 60 applies an increasing drive signal through the resistor 65 to the inverter 68. The inverter 68 applies an inverted drive signal through the lead 83 to a first terminal of the switch 70 which may be a standard 2405 unit. The amplifier drive signal is also applied through the lead 79 to a second switch terminal of the switch 70. In response to a pulse from the toggle flip flop 50 on the lead 75, the switch 70 changes to an opposite state to change the direction of the len's control motor 17 of FIG. 1.

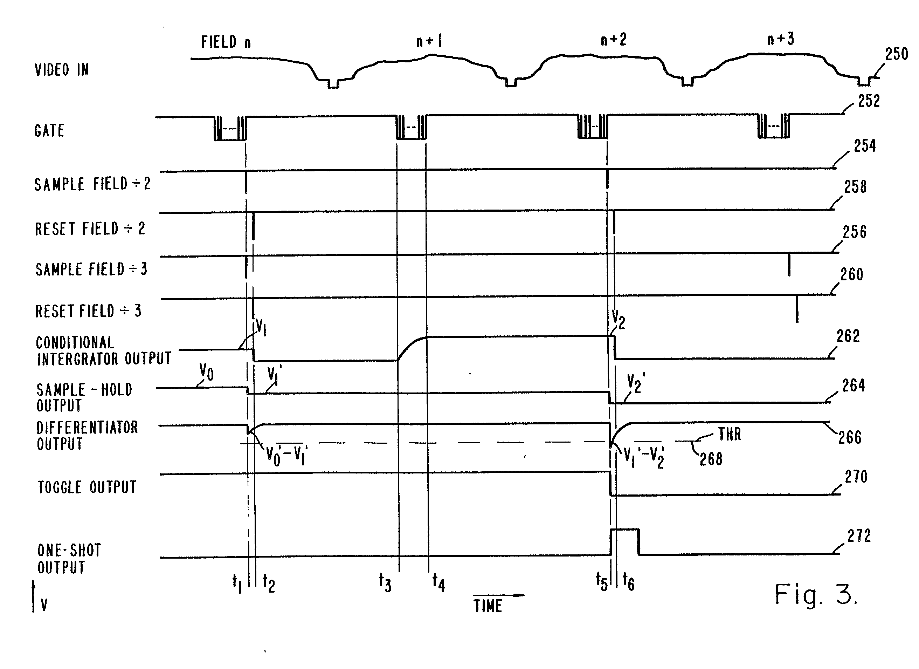

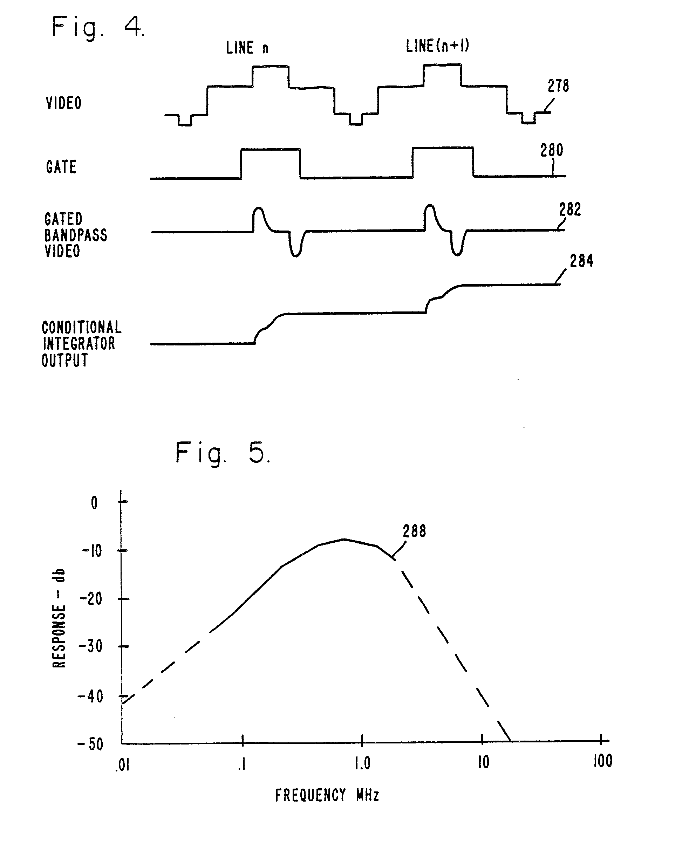

Referring now to FIG. 3 as well as to FIGS. 1, 2a and 2b, the operation of the automatic focus system will be explained in further detail. The video signal provided by the sensor 12 on the lead 16 is shown by a waveform 250 for fields n, n + 1, n + 2 and n + 3. The gating of a portion of the field or raster is shown by a waveform 252 which may be any portion such as a central portion of the field to be displayed. The width of the pulses of the waveform 252 determines the number of lines of data in the vertical dimension that are passed into the focus control system. Gating of a portion of each line will be explained subsequently relative to FIG. 4. Sampling may be performed during each second or third field, for example, as indicated by respective waveforms 254 and 256. Reset pulses which are applied to the conditional integrator of the gated pulse to pulse detector 26, follow the sample pulses 254 and 256 as shown by respective waveforms 258 and 260. The remainder of the waveforms of FIG. 3 are based on the sample divided by 2 and the field video and reset pulses of respective waveforms 250, 254 and 258.

The conditional integrator output on the lead 156 of FIG. 2a as shown by a waveform 262 at sample time t, has an integrated value $V_1$ resulting from integration of the video signals during the previous gate period (not shown) of the waveform 252 and of the line gate periods of FIG. 4. This integrated voltage $V_1$ is stored on the capacitor 154. In response to the sample pulse of the waveform 254, the voltage V' is stored on the capacitor 204 of the sample and hold circuit 38 as shown by a waveform 264, the stored value decreasing from the previously sampled and stored value Vo'. In response to this change, the differentiator 40 develops the negative differential pulse of a waveform 266 having a negative peak value representative of $(V'o - V'_1)$. However, since the negative differential pulse of the waveform 266 does not go below a threshold voltage level 268, the comparator 46 does not provide a pulse to trigger the toggle flip flop 50 to the opposite state, as shown by a waveform 270. The threshold 268 represents a minimum focus change that would cause the focus motor to change direction. Thus, the lens control motor continues to rotate at an increasing and fast speed in the same and unchanged direction, which is the direction of improving the focus. At a time $t_2$, the reset pulse of the waveform 258 resets the conditioned integrator of the detector 26 and the integrator output voltage of the waveform 262 falls to a reference level.

At a time $t_3$ in response to the gate pulse of the waveform 252 and the line gate pulses of FIG. 4, the video signal is applied to the conditional integrator of the detector 26 and the capacitor 154 conditionally charges until time $t_4$ which is the end of the gating pulse of the waveform 252, which charge value $V_2$ is maintained until a time $t_6$. At a time $t_5$ in response to the sample pulse of the waveform 254, the sample and hold circuit 38 samples and stores on the capacitor 204 a new value $V_2'$ of the waveform 264, representative of the change of value of the gated scene. The differentiator circuit 40 responds to this negative change to provide a negative differential pulse at a time $t_5$ as shown by the waveform 266, this pulse being below the threshold 268. As a result, the comparator 46 applies a trigger pulse to the toggle flip flop 50 which changes its state as shown by the waveform 270. The lens control motor 17 then changes direction so that the lens 14 is moving in the direction of better focus. Also in response to the comparison at time $t_5$, the one shot circuit 78 provides an output pulse of a waveform 272 which shorts the switch 69 of FIG. 1 to discharge the integrating capacitor 67. After discharge, the capacitor 67 starts to charge and the motor is driven at a relative slow but increasing speed in the direction which is opposite to the previous direction of rotation. At the time $t_6$, a rest pulse of the waveform 258 resets the conditional integrator 26.

Referring now to FIG. 4 which shows the gating and integration on a time scale for two lines of video, the gating of a portion of the line for forming the dimension of the window of data being sampled along the video lines will be explained. The video signal for lines n and (n + 1) is shown by a waveform 278 and the gating pulses for selecting a portion of each line is shown by a waveform 280. It is to be noted that the gate pulse of the waveform 280 are included in the gate pulse of the waveform 252 of FIG. 3 and are generated by the pulse generator 30 (FIG. 1) and applied as the scene GATE pulses to the switch control 114 of FIG. 2a. The gated bandpass video signals for lines n and (n + 1) are shown by a waveform 282 with the gated video of each portion of a line causing the conditional integrator capacitor 154 of FIG. 2a to charge as shown by a waveform 284, assuming the condition is met, that is, the level shifted video has a greater negative amplitude than the voltage provided by the negative charge on the integrating capacitor 154. This type of gating of a portion of the scene such as a central one-third of the video raster is well known in the art and will not be explained in further detail.

Referring now to FIG. 5, the response of the focus filter of the bandpass amplifier and scene gate unit 24 of FIG. 1 will be further explained. As shown by a curve 288 which has a common corner frequency of 1.0 MHZ, the filter has a characteristic at low frequencies that attenuation is inversely proportional to frequency. This portion of the characteristic is like a weighting factor which favors higher relative frequencies, but rejects none of the signals. Thus, since signals at all video frequencies can contribute to the discriminator output, any scene can be accommodated, even those with unusual frequency . components. The system operates reliably over a wide range of frequency regions.

The portion of the filter characteristic of the curve 288 above the common frequency has a decreasing frequency response for noise rejection. It has been found that the corner frequency portions of a scene are the most important signals for providing focus control. Thus, the input video to the conditional integrator consists principally of the high frequency components of the scne as determined by the band-pass amplifier.

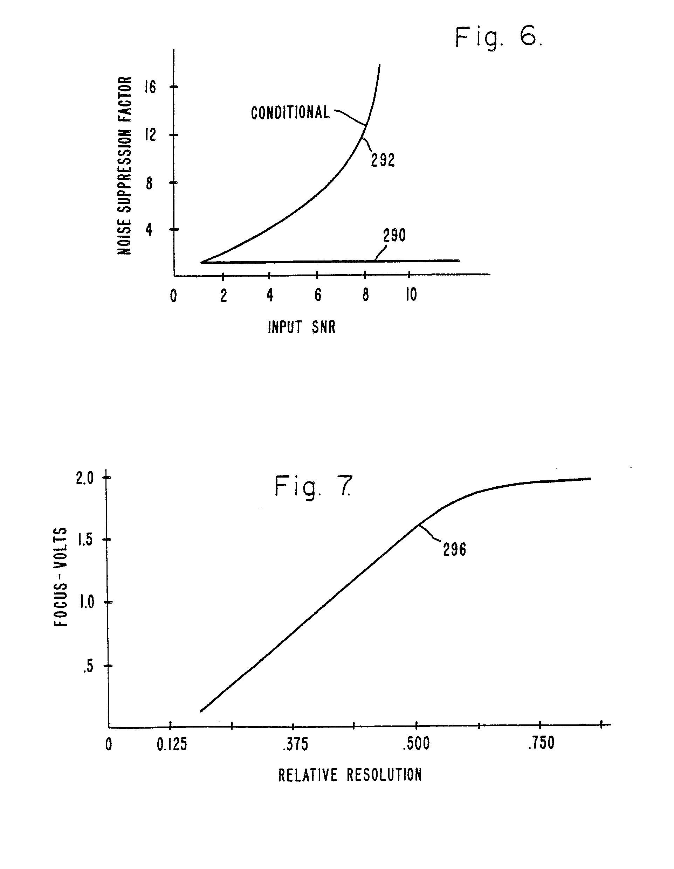

Referring now to FIG. 6, the noise suppression factors shown are based on integrator output averages taken over ten trials with a sequence of 100 signal pulses integrated per trial and a signal pulse duty factor of 40 percent. The unconditional or conventional integrator has a consistent noise suppression factor as shown by a curve 290, at least for all input signal to noise ratios (SNR) greater than one. The conditional integrators performance in accordance with the invention was found to increase exponentially with the input signal to noise ratio as shown by a curve 292. Thus, the system of the invention with the conditional integrator is relatively free of the effects of noise.

Referring to FIG. 7, the response characteristic of the focus discriminator system is shown by a curve 296 which is the output of the sample and hold circuit 38 on the lead 206. Because the high frequency components in the system of the invention are maximized when the image is in sharp focus, the relative resolution increases with the sample and hold focus voltage. The slope of the curve 296 is monotonic and reduced at high frequencies to reduce the effect of noise. Although the discriminator response varies slightly from scene to scene and significantly with noise, it retains the same general characteristic of the waveform 296. Because this characteristic porvides a basis for forming differences in the differentiator circuit 40 (FIG. 2b) the absolute value of the focus volts out of the sample and hold circuit 38 is relatively unimportant. Also because the conditional integrator accumulates the aggregate of noise signals over the sample period, the aggregate is substantially the same for sequential sample periods. Thus, because the differentiator 40 responds to the difference between sequential sample periods and the aggregate of the noise is substantial the same during different sample periods, the noise has a substantially small effect on the focus control voltage. The system of the invention is relatively immune to noise because of the bandpass filter characteristic, because of the spatial scene gating and because the system only responds to the differences of the accumulated or integrated signal.

The servo loop driving system which automatically maximizes the high frequency content of the scene and thus the resolution of the data will now be further explained. The loop acts as a hunting servo to constantly validate focus with test excursions which are imperceptable to the viewer of a display. Because the optics are constantly in motion, adjacent sampled outputs are not normally taken at the same lens location and do not have the same value. If the control values are improving, the loop continues in the same direction at a relatively high speed and accelerates as the integrating capacitor 67 (FIG. 1) charges. If the control values are not improving, the loop reverses motor direction and the lens is driven with a minimum but increasing speed. The truth table for the direction of rotation as a function of a voltage $V_t$ on the lead 206 at the output of the sample and hold circuit 38 of FIG. 2b assuming the negative signal is below the threshold, is as follows where $V_{t-1}$ is the previous voltage:

$$V_t \leq V_{t-1} = \text{Continues in the same direction}$$

$$V_t > V_{t-1} = \text{Reverse direction}$$

By continually moving the lens in a direction of improved focus, the system maximizes the high frequency components of the video data on the lead 16 (FIG. 1) so that high resolution video data is provided such as for a high resolution display.

## Claims

1. A closed loop auto-focusing system reponsive to filtered video signals from a scene (18) to control focusing optics comprising:
   sample and hold means (38) for sampling and storing signals at predetermined intervals,
   a differentiator (40) for determining the difference between signals and providing a differential signal,
   a comparator (46) providing a control signal when the amplitude of an input signal is greater than the amplitude of a threshold signal,
   servo means coupled to said comparator (46) for controlling said focusing optics to continually change in the direction of improved focus in response to said control signal, characterized in that
   said video signal is fed to an integrator (26) to provide integrated signals,
   said integrated signals being sampled and stored in said sample and hold means (38), the output of which is differentiated by means of said differentiator (40),
   said comparator (46) being coupled at its input to said differentiator (40) for comparing said differential signal with the threshold signal.

2. System according to claim 1, characterized in that said integrator (26) and includes means that only integrate peaks of filtered video signal components that have an amplitude greater than the integrated amplitude.

3. System according to claim 2, characterized in that said conditional integrator (26) includes a capacitor (154) biased at a first terminal (160) to a source of reference po-

tential (U$_z$), a resistor (150) for receiving said filtered video signal, a detecting diode (158) coupled to a second terminal (156) of said capacitor (154) and coupled to said resistor (150) for being responsive at one terminal (152) to said filtered video signal, a clamping diode (162) coupled between said one terminal (152) and said source of reference potential (U$_z$) and isolating means (174) coupled between said second terminal (156) of said capacitor (154) and said sample and hold means (38).

4. System according to claim 3, further including a coupling capacitor (146) coupled in series between the output of said scene gating means (24) and said detecting diode (158) and said clamping means (162).

5. System according to claim 4 further including reset means (186, 188) coupled across said coupling capacitor (146) and said integrating capacitor (154) for periodically discharging said capacitors (146, 154).

6. System according to one of the preceding claims, characterized in that said servo means includes a toggle flip flop (50) responsive to said control signal from said comparator (46) representing a decrease of focus, to trigger to the opposite state, a lens control motor (17) coupled to said focusing optics and driver means (56, 60) coupled to said lens control motor (17) and including logic means (56, 60) coupled to said lens control motor (17) and including logic means (76) coupled to said toggle flip flop (50) for changing the direction of said lens control motor (17) when said toggle flip flop (50) triggers to an opposite state.

7. System according to one of the preceding claims, characterized in that a scene gate (24) is provided to be responsive to said filtered video signals for gating the video signals and applying gated video signals to said conditional integrator (26), the gated video signals being a predetermined portion of the video signals representing the scene (18).

8. A focusing system according to claim 1, characterized in that said system includes:

sensor means (10) and controllable focus optics (14) for focusing said video data on a focal plane and for providing said video data in a raster format comprising:

a band-pass filter (84) responsive to the video data from said sensor (10) for accentuating the high frequency components of said video data and attenuating high frequency noise.

9. System according to one of claims 4 to 8, characterized in that said driver means includes means (60) to control said focus motor (17) to rotate at a relatively slow speed when said toggle means (50) periodically changes state and at a relatively fast speed when said toggle means (50) does not periodically change state.

10. System according to claim 6, characterized in that said driver means (60) includes an integrating amplifier (62, 67) for controlling the speed of rotation of said lens control motor (17) and includes reset means (80) responsive to the control signal from said comparator means (46) to periodically dishcarge said integrating amplifier (62, 67).

**Revendications**

1. Un système de mise au point automatique en boucle fermée, réagissant à des signaux vidéo provenant d'une scène (18) de façon à commander des éléments optiques de mise au point, comprenant:

des moyens échantillonneurs-bloqueurs (38) destinés à échantillonner et à enregistrer des signaux à des intervalles prédéterminés,

un différentiateur (40) destiné à déterminer la différence entre des signaux et à produire un signal différentiel,

un comparateur (46) produisant un signal de commande lorsque l'amplitude d'un signal d'entrée est supérieure à l'amplitude d'un signal de seuil,

un servomécanisme connecté au comparateur (46) pour commander les éléments optiques de mise au point de façon à effectuer un changement continuel dans la direction d'une meilleure mise au point, sous la dépendance du signal de commande, caractérisé en ce que

le signal vidéo est appliqué à un intégrateur (26) pour produire des signaux intégrés,

ces signaux intégrés sont échantillonnés et enregistrés dans les moyens échantillonneurs-bloqueurs (38), dont le signal de sortie est différentié par le différentiateur (40), et

l'entrée du comparateur (46) est connectée au différentiateur (40) pour comparer le signal différentiel avec le signal de seuil.

2. Système selon la revendication 1, caractérisé en ce que l'intégrateur est un intégrateur conditionnel (26) et comprend des moyens qui n'intègrent que des crêtes de composantes du signal vidéo filtré qui ont une amplitude supérieure à l'amplitude intégrée.

3. Système selon la revendication 2, caractérisé en ce que l'intégrateur conditionnel (26) comprend un condensateur (154 polarisé à une première borne (160) à une source de potentiel de référence (U$_z$), une résistance (150) destinée à recevoir le signal vidéo filtré, une diode de détection (158) connectée à une seconde borne (156) du condensateur (154) et connectée à la résistance (150), de façon à réagir sur une borne (152) au signal vidéo filtré, une diode de fixation de niveau (162) connectée entre ladite borne (152) et la source de potentiel de référence (U$_z$) et des moyens d'isolation (174) connectés entre la seconde borne (156) du condensateur (154) et les moyens échantillonneurs-bloqueurs (38).

4. Système selon la revendication 3, comprenant en outre un condensateur de couplage (146) branché en série entre la sortie des moyens de transmission sélective de scène (24) et la diode de détection (58) et les moyens de fixation de niveau (162).

5. Système selon la revendication 4, comprenant en outre des moyens des restauration (186, 188) branchés aux bornes du condensateur de couplage (136) et du condensateur d'intégration (154) pour décharger périodiquement ces condensateurs (146, 154).

6. Système selon l'une des revendications précédentes, caractérisé en ce que le servomécanisme comprend une bascule bistable (50) qui réagit au signal de commande provenant du comparateur (46) et représentant une dégradation de mise au point, en passant à l'état opposé, un moteur de commande de lentille (17) accouplé aux éléments optiques de mise au point et des moyens d'attaque (56, 60) connectés au moteur de commande de lentille (17) et comprenant des moyens logiques (76) connectés à la bascule bistable (50) de façon à changer le sens du moteur de commande de lentille (17) lorsque la bascule bistable (50) passe à l'état opposé.

7. Système selon l'une des revendications précédentes, caractérisé en ce qu'il comprend une porte de transmission sélective de scène (24) qui réagit aux signaux vidéo filtrés en transmettant sélectivement les signaux vidéo et en appliquant les signaux vidéo transmis à l'intégrateur conditionnel (26), les signaux vidéo transmis sélectivement constituant une partie prédéterminée des signaux vidéo qui représentent la scène (18).

8. Un système de mise au point selon la revendication 1, caractérisé en ce que ce système comprend:

un capteur (10) et des éléments optiques de mise au point (14) pouvant être commandés, destinés à effectuer la mise au point des données vidéo dans un plan focal et à fournir ces données vidéo dans un format de balayage par trame, comprenant:

un filtre passe-bande (84) qui réagit aux données vidéo provenant du capteur (10) en accentuant les composantes de haute fréquence des données vidéo et an atténuant le bruit de haute freéquence.

9. Système selon l'une des revendications 4 à 8, caractérisé en ce que les moyens d'attaque comprennent des moyens (60) destinés à commander le moteur de mise au point (17) pour le faire tourner à une vitesse relativement lente lorsque la bascule bistable (50) change périodiquement d'état, et à une vitesse relativement rapide lorsque la bascule bistable (50) ne change pas d'état périodiquement.

10. Système selon la revendication 6, caractérisé en ce que les moyens d'attaque (60) comprennent un amplificateur intégrateur (62, 67) destiné à commander la vitesse de rotation du moteur de commande de lentille (17) et comprennent des moyens de restauration (80) qui réagissent au signal de commande provenant du comparateur (46) en déchargeant périodiquement l'amplificateur intégrateur (62, 67).

**Patentansprüche**

1. Automatisches Scharfeinstellsystem mit einem geschlossenen Regelkreis für gefilterte, von einer Beobachtungsszene (18) stammender Signale zum Regeln einer Scharfeinstell-Optik mit

Sample- and Hold-Mitteln zum Abtasten und Speichern von Signalen in vorbestimmten Zeitabschnitten,

einer Differenzierstufe (40) zum Bestimmen der Signaldifferenz und zum Erzeugen eines Differenzsignales,

einem Komparator (46) zum Erzeugen eines Regelsignales dann, wenn die Amplitude eines Eingangssignales größer als die Amplitude eines Schwellwertes ist,

mit an den Komparator (46) angeschlossenen Servo-Mitteln zum Regeln der Scharfeinstell-Optik derart, daß sie in Abhängigkeit vom Regelsignal kontinuierlich in die Richtung einer verbesserten Scharfeinstellung nachgestellt wird, dadurch gekennzeichnet, daß

das Video-Signal einem Integrator (26) zum Erzeugen integrierter Signale zugeführt wird,

daß die integrierten Signale in den Sample- and Hold-Mitteln (38) abgetastet ung gespeichert werden, deren Ausgangssignal mittels der Differenzierstufe (40) differenziert wird,

und daß der Komparator (46) mit seinem Eingang an die Differenzierstufe (40) angeschlossen ist und das differenzierte Signal mit dem Schwellwert vergleicht.

2. System nach Anspruch 1, dadurch gekennzeichnet, daß der Integrator ein Bedingungs-Integrator (26) ist und Mittel umfaßt, die Spitzenwerte gefilterter Video-Signalkomponenten nur dann integrieren, wenn deren Amplitude größer ist als die integrierte Amplitude.

3. System nach Anspruch 2, dadurch gekennzeichnet, daß der Bedingungs-Integrator (26) einen Kondensator (154), der an einem ersten Anschlub (160) mit einer Quelle eines Referenz-Potentiales ($U_z$) vorgespannt ist, einen Widerstand (150) zum Empfang des gefilterten Video-Signales, eine Detektordiode (158), die an den Zweiten Anschluß (156) des Kondensators (154) angeschlosen und mit dem Widerstand (150) verbunden ist, und an ihrem einen Anschluß (152) das gefilterte Video-Signal empfängt, eine Klemmdiode (162), die zwischen dem einen Anschluß (152) und der Quelle eines Referenz-Potentiales ($U_z$) geschaltet ist und Isoliermittel (174) umfaßt, die zwischen dem zweiten Anschluß (156) des Kondensators (154) und dem Sample- and Hold-Mitteln (38) geschaltet sind.

4. System nach Anspruch 3, das weiterhin einen Koppelkondensator (146) umfaßt, der in Reihe zwischen dem Ausgang der die Beobachtungsszene abtastenden Mittel (24) und der Detektordiode (158) und den Klemm-Mitteln (162) geschaltet ist.

5. System nach Anspruch 4, das ferner Rücksetzmittel (186, 188) umfaßt, die über den Koppelkondensator (146) und den Integrationskondensator (154) geschaltet sind und diese Kondensatoren (146, 154) periodisch entladen.

6. System nach einem der vorhergehenden Ansprüche, dadurch gekennzeichnet, daß die Servo-Mittel ein Flip-Flop (50) zum Hin- und Herschalten umfassen, das auf das Regelsignal des Komparators (46) anspricht, welches eine Abnahme der Scharfeinstellung anzeigt und einerseits im entgegengesetzten Sinne, einen Nachstellmotor (17) für die Optik, der an die Scharfeinstell-Optik angeschlossen ist, auslöst sowie andererseits Treibermittel (56, 60), die an den Nachstellmotor (17) für die Optik angeschlossen sind und logische Mittel (76) umfassen, die an das Flip-flop (50) Hin- und Herschalten angeschlossen sind und die Richtung des Nachstellmotors (17) für die Optik umkehren, sobald das Flip-Flop (50) zum Hin- und Herschalten in einen entgegengesetzten Schaltzustand umgeschaltet wird.

7. System nach einem der vorhergehenden Ansprüche, dadurch gekennzeichnet, daß ein Abtaster (24) für die Beobachtungsszene vorgesehen ist, der auf die gefilterten Video-Signale anspricht und die Video-Signale abtastet und die abgetasteten Video-Signale dem Bedingungs-Integrator (26) zuführt, wobei die abgetasteten Video-Signale ein vorbestimmter Ausschnitt aus denjenigen Video-Signalen Sind, welche die Beobachtungsszene (18) darstellen.

8. Scharfeinstellsystem nach Anspruch 1, dadurch gekennzeichnet, daß es umfaßt:

Sensormittel (10) und eine regelbare Scharfeinstell-Optik (14) zum Scharfeinstellen der Video-Daten auf eine Scharfeinstell-Ebene und zum Erzeugen der Video-Daten in einem Raster-Format mit:

einem Bandpaßfilter (84) welches auf die Video-Daten des Sensors (10) anspricht, die Hochfrequenzanteile der Video-Daten anhebt und das Hochfrequenz-Rauschen abschwächt.

9. System nach einem der Ansprüche 4 bis 8, dadurch gekennzeichnet, daß die Treibermittel Mittel (60) umfassen, die den Scharfeinstell-Motor (17) regeln derart, daß die Drehzahl dann relativ niedrig ist, wenn die Hin- und Her-Schaltmittel (50) periodisch ihren Zustand ändern und dann relativ hoch ist, wenn, die Hin- und Her-Schaltmittel (50) nicht periodisch ihren Zustand ändern.

10. System nach Anspruch 6, dadurch gekennzeichnet, daß die Treibermittel (60) einen Integrator-Verstärker (62, 67) umfassen, der die Drehzahl des Nachstellmotors (17) für die Optik regelt und Rückstellmittel (80) umfaßt, die auf das Regelsignal der Komparatormittel (46) ansprechen und den Integrator-Verstärker (62, 67) periodisch entladen.

# 0031483

## Fig. 1.

Fig. 2a.

Fig. 2b.

TO POWER DRIVER

SAMPLE

Fig. 3.

Fig. 4.

Fig. 5.

Fig. 6.

Fig. 7.